# EUROPEAN PATENT APPLICATION

(11) **EP 4 583 100 A1**
(43) Date of publication of application: **09.07.2025**
(21) Application number: 24150337.4
(22) Date of filing: 04.01.2024
(51) Int. Cl.: G10L 15/22, H04L 12/28

(54) **CONTROLLING A HOME APPLIANCE WITH A LANGUAGE MODULE**

(71) Applicant: BSH Hausgeräte GmbH, 81739 München (DE)
(72) Inventor: Kirschner, Manuel, 93047 Regensburg (DE); Sacha, Magdalena, 02-769 Warsaw (PL)

(57) **Abstract**

A method of controlling a home appliance with a language module comprising a large language model, the method comprising:
- the language module receives an input query;
- the language module decides if the input query comprises a task-based query;
- the language module translates the task-based query to a machine syntax, wherein the machine syntax is understandable by the home appliance;
- the language module outputs the machine syntax;
- the home appliance receives the machine syntax; and
- the home appliance executes the machine syntax.

## Description

The present invention relates to a method of controlling a home appliance with a language module. The present invention further relates to a method of prompting and/or training a large language model for controlling a home appliance with a language module. The present invention further relates to a method of generating a prompting and/or training dataset for a large language model. The present invention further relates to a prompting and/or training dataset for use in the method of training a large language model. The present invention further relates to a use of the method. The present invention further relates to a data processing system comprising means for carrying out the method. The present invention further relates to a computer program. The present invention further relates to a computer-readable medium.

Nowadays it is possible to control a home appliance with a voice control system, wherein the voice control system comprises a language module. The language module according to the state of the art acts on the transcribed content of the user's command in a simple "intent and slot" paradigm. An intent, for example, can be "configure_washer_program", "start_program", "stop_program", "get_remaining_program_time", etc. A slot, for example, can be "program_name" as slot name and "cotton", "mix", "silk", etc. as slot values, or "temperature" as slot name and "20", "30", "90", etc. as slot values, or "spin_speed" as slot name and "0", "800", "1000", etc. as slot values, or "options" as slot name and one or more of "water_plus", "low_wrinkles", etc. as slot values, etc. Hereby the intent represents the use case or main intention of what, in particular by a user, is tried to achieve with the voice command and a slot can further specify the intent.

Preferably every command is associated with exactly one intent. Preferably some commands and in particular some intents, are associated with one, preferably with more than one, slot. If a command concerns a topic that is out of the domain to the known intents and/or slots, the language module will produce a special intent saying that the command was not recognized. As one can imagine, such a communication between a user and the home appliance is very limited to only predefined key words, in particular to pre-defined lexical, in particular as in words or synonyms, choices and variations and to pre-defined syntactic, in particular as in sentence structure, choices and variations.

An object underlying present invention lies in providing an improved, in particular a robust, technique for controlling a home appliance with a language module. The invention solves above-mentioned object through the subject matter of the independent claims. Dependent claims describe preferred embodiments.

A, in particular computer-implemented, method of controlling a home appliance with a language module comprising a large language model, the method comprising these steps:
- the language module receives an input query, in particular in natural language;
- the language module decides if the input query comprises a task-based query
- the language module translates the task-based query to a machine syntax, wherein the machine syntax is understandable, in particular is understood, by the home appliance;
- the language module outputs the machine syntax;
- the home appliance receives the machine syntax; and
- the home appliance executes the machine syntax.

Preferably a task-based query comprises a query connected to a user intention of changing the internal state of the home appliance. Preferably a task-based query can be, without any limitation, a query such as changing selected program name or other program settings, like for example "I want to wash a silk shirt with oil stains" or "set the cotton program with 60 degrees". Preferably the language module outputs a corresponding machine syntax, in particular sets the washing machine to a silk shirt washing program or to a cotton program with 60 degrees.

In particular by using a language module comprising a large language model, a robust technique for controlling a home appliance with a language module. Robustness can, for example, mean that commands, in particular voice commands, in particular natural language commands, can be understood by the language module, irrespective which lexical, in particular as in words and/or synonyms, choices and variations and irrespective which syntactic, in particular as in sentence structure, choices and variation, commands have been formulated. In particular by translating the task-based queries to a machine syntax by the language model, the commands can be understood by the home appliance.

Preferably the language module outputs that the machine syntax has been sent to the home appliance. In particular this is a confirmation and/or feedback that the command has been understood by the language module. In particular this is a signal that the home appliance has been instructed with the command.

Preferably the output, in particular the output from the language module that the machine syntax has been sent to the home appliance, is converted to speech, in particular to speech output, in particular in a text to speech module. Preferably this can be, in particular acoustically, audible by a user.

Preferably the language module decides if the input query comprises an assistance query. Preferably the language module outputs an, in particular natural language, answer to the assistance query. In particular the language module answers to commands that are directed to a particular task of the home appliance and answers to informative questions, in particular assistance queries. With such a language module, preferably, a natural communication can be established.

Preferably an assistance query comprises a query connected to any home-appliance related assistance questions, preferably that a user might have and/or preferably that are not related to a user intention of changing internal state of the home appliance, like for example "how do I clean my washing machine?". Preferably the language module answers with a corresponding output, preferably, however, the machine does not take any action, in particular because it is not a task based query but only an assistance query.

In particular an input query can comprise the task based query and the assistance query. In particular the language module decides if the input query comprises the task based and/or the assistance query. Preferably the language model outputs the machine syntax and/or an answer to the assistance query. As an example, if the input query is "I want to wash a silk shirt with oil stains" or "set the cotton program with 60 degrees", the system reaction to a task based query includes setting the washing machine to a silk shirt washing program or to a cotton program with 60 degrees, wherein the system reaction to an assistance query is a system answer like "I have set the washing machine to a silk shirt washing program, because this will clean the silk shirt and also helps to remove the oil stains" or "I have set a cotton program with 60 degrees; please remind to only put clothes made of cotton into the washing machine".

Preferably the home appliance is voice controlled with a voice command. Preferably the voice command is converted to the input query, in particular in an automatic speech recognition module. Preferably the input query is in text form.

A, in particular computer-implemented, method of prompting and/or training a large language model for controlling a home appliance with a language module comprising the large language model, in particular for use of the method according to one of the above claims; the method comprising:
- receiving an input prompting and/or training dataset comprising a connection between an input query, in particular in natural language, and a machine syntax.

Preferably a pre-trained large language model can be used as a basis. With prompting and/or training the preferably pre-trained large language model, the large language model is able to convert commands to machine syntax, in particular machine syntax that is understandable by the home appliance. Training can also be understood as tuning and/or fine tuning of a pre-trained large language model.

Preferably the input prompting and/or training dataset is derived from a documentation, in particular a home-appliance related documentation, which could be a manual and/or an internal and/or public documentation of a home appliance software interface. For example an internal documentation can be the documentation of a home appliance software interface which allows control of the home appliance. In particular an existing manual can be used in order to prompt and/or train a, in particular existing, large language model. The software interface documentation, preferably, provides the link between natural language, in particular commands, and a machine syntax. Preferably the large language model recognizes the machine syntax as given, but also recognizes that different, but only lexical and/or syntactic varied, commands, can be used as descriptions of the machine syntax in the software interface documentation. A natural interaction can be established.

Preferably before the language module outputs a machine syntax, the module asks for a confirmation whether the machine syntax is a correct translation of the input query.

A, in particular computer-implemented, method of generating a prompting and/or training dataset for a large language model, in particular for use of the method described herein; comprising:
- establishing a connection between an input query, in particular in natural language, and a machine syntax, preferably derived from documentation.

A prompting and/or training dataset for use in the method of training a large language model described herein; the method comprising:
- preferably a number of example input queries formulated in natural language, along with a translation from the input queries to a machine syntax and/or
- preferably a task description that specifies in natural language the intended behavior of the language module with respect to its output and the specific format of the machine syntax possibly contained therein

It is furthermore proposed that a method disclosed herein is used for communication with a home appliance.

A data processing system comprising means for carrying out the method described herein.

Preferably the language module resides on a high-performance computer, preferably in a cloud, the computer also often called a server. Preferably the heavy workload of the language module is outsourced to a server, whereas preferably the compute unit, in particular embedded in the home appliance, can be comparatively, in particular compared to a server, small. Alternatively, a distilled version of the large language model is hosted on an embedded compute unit, wherein in particular the computing performance is smaller than that of a server. In particular the server can be hosted in a company infrastructure. Preferably the distilled version is hosted on the home appliance.

A computer program comprising instructions, which, when the program is executed by a computer, cause the computer to carry out the method described herein.

A computer-readable medium comprising instructions, which, when executed by a computer, cause the computer to carry out the method described herein.

The method may be realized as a computer program product with program code means and may be stored on a computer readable media. The method may be adapted to be carried out, completely or in part, by a processing means. The processing means may be of electronic nature comprising a micro computer or micro controller, an ASIC or a similar device. Features or advantages of the method may be applicable to a corresponding device or system as well as vice versa.

The invention will now be discussed in more detail with reference to the enclosed drawings in which:
- figure 1: shows a schematic illustration of a communication between a user and a home appliance;
- figure 2: shows a schematic and exemplary illustration of a language module for the communication;
- figure 3: shows a flow diagram of a method of controlling the home appliance,
- figure 4: shows a flow diagram of a method,
- figure 5: shows a flow diagram of a method of prompting and/or training a large language model,
- figure 6: shows a prompting and/or training dataset, a processing system, a workstation, a computer program, and a computer-readable medium.

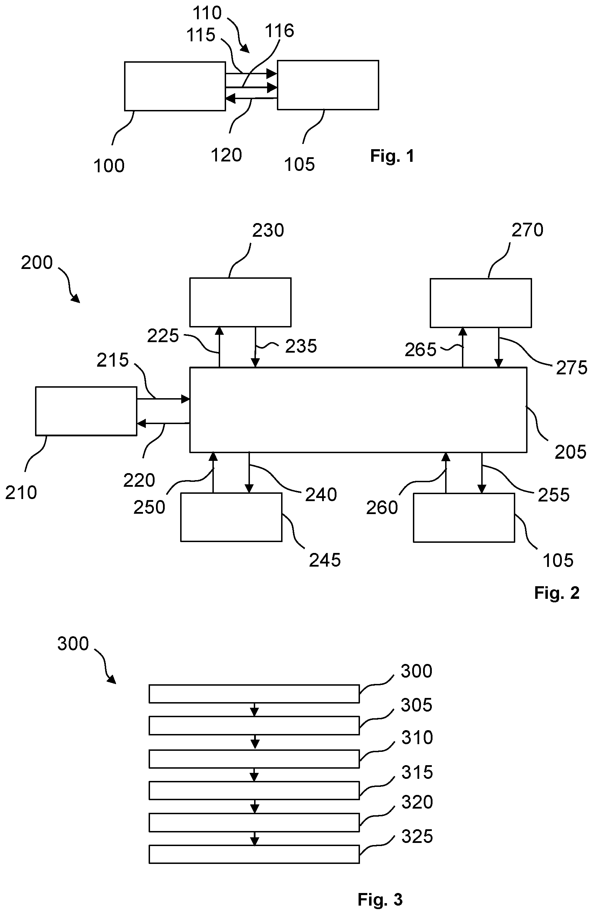

Figure 1 shows a user 100, who communicates with a home appliance 105. In a broader sense, a home appliance 105 can be any IoT (Internet of Things) device. A home appliance 105 can be, to name only some examples, a washing machine, a dryer, a dish washer, a stove, a fridge, a freezer, a vacuum cleaner, or any home appliance. The user 100 sends an input query 110, in particular a task based query 115, to the home appliance 105. Such a task based query 115 can be, for example, configuring, in particular steering and/or making a request to, a washing machine by a program name like, for example "cotton", "mix", "silk", or the such and/or specifications like "temperature "20", "30", "90", to name only some examples. Another example for a task based query is "how to treat grass stains on a silk shirt". The message, in particular the input query 110, can also be and/or comprise an assistance query 116, for example, a question to the home appliance 105, like for example "how to clean the washing machine".

The home appliance 105 sends an output 120 to the user 100. The output 120 is preferably an information message to the input query 110. If the input query 110 is a task based query 115, the output 120 can be, for example, "confirmation, the program is cotton and the temperature is 90 °C". If the input query 110 is an assistance query 116, the output 120 can be, for example, "to treat grass stains on a silk shirt, try applying some mild detergent directly to the stain" or "to clean your washing machine, insert 100 ml of washing machine cleaner into the detergent tray". The input query 110 can also comprise a task based query 115 and an assistance query 116. For example if the input query 110 "I have put a silk shirt with oil stains into the machine", the task based query 115 can be to set a silk washing program and the assistance query 116 can be to answer "I recommend to start a silk washing program, which helps to clean your silk shirt including oil stains. The program will take a little while so that all oil stains can be cleaned. If you want, I can start the program now". These are only some examples, many further examples are imaginable.

The input query 110, in particular the task based query 115, in particular the assistance query 116, and the output 120 are preferably voice messages and voice outputs. In a further embodiment, the input query 110 and the output 120 can also be any kind of messages, for example text messages, visual messages, etc.

Figure 2 shows a schematic and exemplary illustration of a language module 200 for the communication, in particular for the communication between the user 100 and the home appliance 105. The language module 200 comprises a dialog manager 205. The language module 200 comprises a word detector 210, in particular a hot word and/or wake word detector. Once the user 100 sends the input query 110, in particular task based query 115 and/or assistance query 116, the word detector 210 detects the message. After detection of the input query 110, the word detector 210 sends 215 the detected input query 110 to the dialog manager 205. The dialog manager 205 sends 220 back to the word detector 210 that the input query 110 has been received, and in particular instructs the word detector 210 to wait. The dialog manager 205 sends 225 the input query 110 to an automatic speech recognition device 230, in particular for the case when the input query 110 is a voice message. The automatic speech recognition device 230 translates the voice input query 110 to a text input query 110. The automatic speech recognition device 230 sends 235 the input query 110, in particular as a text input query 110, back to the dialog manager 205.

The dialog manager 205 sends 240 the input query 110, in particular as a text input query 110, to a large language model device 245. The large language model device 245 is, for example, a device comprising a large language model, in particular a machine learning model. The large language model decides if the input query 110 comprises a task based query 115 and/or an assistance query 116.

If a task based query 115 is detected, the language module 200, in particular the large language model device 245, translates the task based query 115 to a machine syntax. The machine syntax is a syntax that is understandable by the home appliance 105. The large language model device 245 sends 250 the machine syntax to the dialog manager 205, which sends 255 the machine syntax to the home appliance 105. The home appliance 105 executes the machine syntax and confirms 260 to the dialog manager that the machine syntax has been executed. The dialog manager 205 sends 265 a confirmation message to a text to speech device 270. The text to speech device 270 converts the confirmation message to a voice message and sends 275 the voice message to the dialog manager 205. The dialog manager 205 informs the user 100 over the voice message that the machine syntax has been executed.

If an assistance query 116 is detected, the language module 200, in particular the large language model device 245, finds an answer to the assistance query 116. The large language model device 245 sends 250 the answer to the dialog manager 205. The dialog manager 205 sends 265 the answer to the text to speech device 270. The text to speech device 270 converts the answer to a voice answer and sends 275 the voice answer to the dialog manager 205. The dialog manager 205 informs the user 100 about the voice answer.

The input query 110 can comprise a task based query 115 and an assistance query 116. This can be even for short input queries 110, for example "I have put dirty cotton into the machine", can comprise the task based query 115 to start a program that will clean the cotton, but also to answer to the user that a certain program is recommended and/or to give any recommendations and/or answers to the user regarding "dirty cotton".

Figure 3 shows exemplarily a method 300 of controlling the home appliance 105 with a language module 200 comprising a large language model, in particular a large language model device 245, the method comprising:
- the language module 200 receives 300 an input query 110;
- the language module 200 decides 305 if the input query 110 comprises a task based query 115;
- the language module 200 translates 310 the task based query 115 to a machine syntax, wherein the machine syntax is understandable by the home appliance 105;
- the language module 200 outputs 315 the machine syntax;
- the home appliance 105 receives 320 the machine syntax; and
- the home appliance 105 executes 325 the machine syntax.

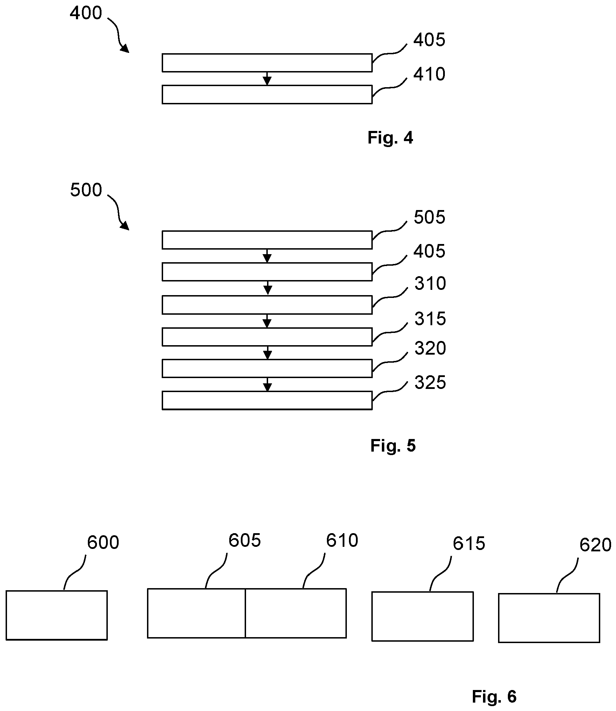

Figure 4 shows exemplarily a method 400 of prompting and/or training a large language model for controlling the home appliance 105 with a language module 200 comprising the large language model, in particular the large language model device 245, in particular for use of the method described herein; the method 400 comprising:
- receiving 405 an input prompting and/or training dataset comprising a connection between an input query and a machine syntax, in particular wherein the input prompting and/or training dataset is derived from a manual.
- In particular wherein before the language module 200 outputs a machine syntax, the module asks 410 for a confirmation whether the machine syntax is a correct translation of the input query.

Figure 5 shows exemplarily a method 500 of generating a prompting and/or training dataset for a large language model, in particular for use of the method described herein; comprising:
- establishing 505 a connection between an input query 110 and a machine syntax.

Figure 6 shows exemplarily a prompting and/or training dataset 600 for use in the method of training a large language model described herein; the method comprising:
- input queries 110 formulated in natural language;
- a translation from the input queries 110 to a machine syntax.

Preferably the method described herein is used for a communication with the home appliance 105.

Figure 6 shows a data processing system 605 comprising means for carrying out the method described herein. The data processing system 605 preferably comprises the language module, which preferably resides on a workstation 610. The workstation 610 is in particular a powerful workstation. The workstation 610 can, for example, be in a cloud, wherein the home appliance 105 has a connection, preferably internet connection, to the cloud.

Figure 6 shows exemplarily a computer program 615 comprising instructions, which, when the program is executed by a computer, cause the computer to carry out the method described herein. Figure 6 shows exemplarily a computer-readable medium 620 comprising instructions, which, when executed by a computer, cause the computer to carry out the method described herein.

The method described herein and system described herein are preferably for customizing the behavior of large language models, in particular focusing on their flexible ability to both provide natural language answers to users' questions and to generate messages in a specific syntax, in particular machine syntax, for controlling the home appliance 105, and/or in particular other internet of things (IoT) devices, preferably via an application programming interface (API). Large language models, for example such as GPT-3.5, are designed to understand and generate human-like text based on vast pre-trained knowledge. The method described herein harnesses the large language model potential to create tailored responses that cover two diverse applications, in particular first controlling and/or steering the home appliance 105), preferably via voice, in particular second getting domain-specific voice assistance in the home appliance domain.

Large language models preferably operate through a neural network architecture that employs a transformer-based model, preferably leveraging vast pre-existing textual data for contextual understanding and text generation. In particular by training on a multitude of data sources, large language models have gained proficiency in understanding and generating human-like text.

In particular to provide natural language answers to users' questions, the system preferably utilizes the large language model's capacity to comprehend the input prompt, context, and/or user queries, in particular input query 110. Preferably this is achieved through fine-tuning and customization of the model's parameters to suit specific domains or tasks. In particular the user 100 can input a question, query, or request, and the system generates coherent, contextually relevant responses.

In particular in the context of controlling a home appliance 105, and/or a IoT device, preferably via the API, the system leverages the language model's text generation capabilities to produce messages in a specific syntax understood by the home appliance 105, and/or a IoT device, control system. Preferably the syntax includes commands, along with any parameters and data required to interact with the device, in particular home appliance 105, for remote control. Preferably by prompting the model with instructions and parameters, the large language model produces tailored messages that allow seamless communication with the home appliance 105.

In particular first generating messages in specific syntax for controlling a home appliance and/or any IoT device, preferably via APIs, and in particular second providing natural language answers to users' assistance queries in that same home appliance domain can be provided.

Preferably an efficient and intuitive controlling of the home appliance 105, in particular via voice, as well as generating expert-level assistance responses to users' questions they posed by voice is enabled.

In one embodiment of the invention, technically, the large language model is customized such as a common large language model, for example GPT-3.5, via a technique called "prompting". In particular the concept of large language model prompting revolves around the ability to interact with these sophisticated large language models by providing them with specific instructions, called (input) prompts. Preferably this process enables to customize the behavior of large language models for various applications. For example when a prompt is inputted, the large language model processes the text and generates a response based on its vast pre-trained knowledge and understanding of the provided context. Preferably by carefully crafting prompts, desired outputs for both applications, in particular tasked-based query and assistance query, can be elicited.

In particular the large language model is inputted into the language module as a new software module, in particular which usually resides on a powerful computer, for example a workstation, in the cloud, preferably that also has a software interface compatible with a protocol known from the state of the art, for example the Hermes Protocol, i.e., it can "subscribe to" (read) specific protocol messages originating from other software modules, and "publish" (write) other specific protocol messages that will be read by other software modules further down in the typical message chain.

Preferably the large language model comprises input and output queries.

Input queries can come, for example as specified in the protocol, for example Hermes protocol, with additional data, in particular wrapped in a so-called "message payload", for example that contain the user's command, in particular which the ASR component had previously transcribed from audio to text form. Through this message type, the large language model module particularly will receive queries of both types described above, in particular task based queries and assistance queries.

The large language model module preferably will provide one or more of the following message types, in particular depending on the large language model's internal decision logic, that preferably is specified by instructing the model via prompting: In particular first, for task based queries, in particular where the user expects the home appliance status to be changed/manipulated as a consequence of their query (voice command). In particular second when the payload of these messages carries the natural language text that will then be converted to audio by the text to speech module, and in particular will be played back to the user via a loudspeaker. These messages can be sub-classified as follows:
First, in particular for task based queries, where the large language model had already produced output, the large language model complements the output with a meaningful and typically short natural language message that will confirm the home appliance status change to the user, for example "I have selected the mix program and added the stain option for you."
Second, in particular for assistance queries, the large language model is instructed, in particular via prompting, to syntactically wrap its "normal" text response, for example into the payload of the "hermes/tts/say" message.

Advantageously and preferably this technical solution allows to remove some or all of the "statically stored dialogue system's speech responses" known from the state of the art, in particular that were previously encoded in the "Client Code", and in particular retrieved from there when, for example, the client code processes "hermes/intent/<intentName>" messages.

It could be shown a benefit of massively superior natural language understanding (NLU) performance that comes with large language models technology, with regard to any previous natural language understanding solution, in particular rule-based, statistical for task based voice use-cases. In particular "performance", also known as "robustness", in the context of natural language understanding describes the system's ability to understand voice commands irrespective of the user question's, in particular with regard to first lexical, for example as in words/synonyms, choices and variations, in particular with regard to syntactic, for example as in sentence structure, choices and variations.

It could be shown a benefit of vast domain-independent/general "world knowledge" captured in the large language model, in particular possibly enhanced with domain-specific knowledge through "2-step approach". Preferably a voice control system can technically interface with the host IoT device and/or home appliance to read or modify the device and/or appliance state.

As one example an exemplary answer to an exemplary question will be described, wherein the answer comprises a natural language answer for the user and a machine syntax:
The user asks "How to wash my cotton scarf?". The language module 200 outputs an answer to the assistance query: "I have selected the most suitable program for you: the cotton program. This program is specifically designed for cleaning cotton or linen clothing with normal to heavy soiling. The maximum load for this program is 5 kg. Insert your scarf into the drum and close the door." The language module 200 outputs the machine syntax: "intent: configure_washer_program; program Key: LaundryCare. Washer. Program. Cotton". Preferably the "intent" value describes the user command's underlying intent; preferably "programKey" is a slot whose value identifies the machine-readable washer program that the user intended to select.

### Reference list (as part of the description)

- 100: user
- 105: home appliance
- 110: input query
- 115: task based query
- 116: assistance query
- 120: output

- 200: language module
- 205: dialog manager
- 210: word detector
- 215: sending
- 220: sending
- 225: sending
- 230: automatic speech recognition device
- 235: sending
- 240: sending
- 245: large language model device
- 250: sending
- 255: sending
- 260: confirming
- 265: sending
- 270: text to speech device
- 275: sending

- 300: method
- 305: deciding
- 310: translating
- 315: outputting
- 320: receiving
- 325: executing
- 400: method
- 405: receiving
- 410: asking

- 500: method
- 505: establishing

- 600: training dataset
- 605: processing system
- 610: workstation
- 615: computer program
- 620: computer-readable medium

## Claims

1. A method (300) of controlling a home appliance (105) with a language module (200) comprising a large language model, the method (300) comprising:
- the language module (200) receives (300) an input query (110);
- the language module (200) decides (305) if the input query (110) comprises a task based query (115);
- the language module (200) translates (310) the task based query (115) to a machine syntax, wherein the machine syntax is understandable by the home appliance (105);
- the language module (200) outputs (315) the machine syntax;
- the home appliance (105) receives (320) the machine syntax; and
- the home appliance (105) executes (325) the machine syntax.

2. Method (300) according to claim 1, wherein the language module (200) outputs that the machine syntax has been sent to the home appliance (105).

3. Method (300) according to claim 2, wherein the output (120) is converted to speech, in particular to speech output.

4. Method (300) according to one of the above claims, wherein the language module (200) decides if the input query (110) comprises an assistance query (116); and wherein the language module (200) outputs an answer to the assistance query (116).

5. Method (300) according to one of the above claims, wherein the home appliance (105) is voice controlled with a voice command; wherein the voice command is converted to the input query (110); wherein the input query (110) is in text form.

6. A method (400) of prompting and/or training a large language model for controlling a home appliance (105) with a language module (200) comprising the large language model, in particular for use of the method (300) according to one of the above claims; the method (400) comprising:
- receiving (405) an input prompting and/or training dataset (600) comprising a connection between an input query (110) and a machine syntax.

7. Method (400) according to claim 6, wherein the input prompting and/or training dataset (600) is derived from a manual.

8. Method (400) according to claims 6 or 7, wherein before the language module (200) outputs a machine syntax, the language module (200) asks for a confirmation whether the machine syntax is a correct translation of the input query (110).

9. A method (500) of generating a prompting and/or training dataset (600) for a large language model, in particular for use of the method (300) according to one of the claims 1 to 5; comprising:
- Establishing (505) a connection between an input query (100) and a machine syntax.

10. A prompting and/or training dataset (600) for use in the method (500) of training a large language model of claim 9; comprising:
- input queries (110) formulated in natural language;
- a translation from the input queries (110) to a machine syntax.

11. Use of the method (300) according to claims 1 to 5 for:
- communication with a home appliance.

12. A data processing system (605) comprising means for carrying out the method (300, 400, 500) of any one of claims 1 to 9.

13. The data processing system (605) according to claim 12, wherein the language module (200) resides on a workstation (610).

14. A computer program (615) comprising instructions, which, when the program (615) is executed by a computer, cause the computer to carry out the method (300, 400, 500) of any one of claims 1 to 9.

15. A computer-readable medium (620) comprising instructions, which, when executed by a computer, cause the computer to carry out the method (300, 400, 500) of any one of claims 1 to 9.
